## Europäisches Patentamt

## European Patent Office

## Office européen des brevets

(19)

(11) Veröffentlichungsnummer: **0 153 997**
**B1**

(12) # EUROPÄISCHE PATENTSCHRIFT

(45) Veröffentlichungstag der Patentschrift:
03.02.88

(21) Anmeldenummer: **84113637.7**

(22) Anmeldetag: **12.11.84**

(51) Int. Cl.⁴: **G 01 L 1/24**

(54) Verfahren zur Kraftmessung mit Hilfe der spannungsinduzierten Doppelbrechung in einem Monomode-Lichtleiter und Messanordnung zur Durchführung des Verfahrens.

(30) Priorität: **24.01.84 CH 300/84**

(43) Veröffentlichungstag der Anmeldung:
**11.09.85 Patentblatt 85/37**

(45) Bekanntmachung des Hinweises auf die Patenterteilung:
**03.02.88 Patentblatt 88/5**

(84) Benannte Vertragsstaaten:
**DE FR GB**

(56) Entgegenhaltungen:
**EP-A-0 120 999**
**DE-A-3 039 235**
**DE-A-3 042 794**
**DE-A-3 205 798**
**DE-A-3 211 828**

(73) Patentinhaber: **Mettler Instrumente AG, Im Langacher, CH- 8606 Greifensee (CH)**

(72) Erfinder: **Dändliker, René, Prof. Dr., Route des Pins 14, CH- 2035 Corcelles (CH)**
Erfinder: **Bertholds, Axel, Rue des Saars 85, CH-2000 Neuchâtel (CH)**

EP 0 153 997 B1

## Beschreibung

Die Erfindung betrifft ein Verfahren und eine Meßanordnung zur Kraftmessung mit Hilfe der spannungsinduzierten Doppelbrechung in einem Monomode-Lichtleiter.

Die Messung von Kraft oder Druck durch induzierte Doppelbrechung in Monomode-Lichtleitern ist grundsätzlich bekannt. Gleichfalls bekannt sind elektrooptische Detektionsverfahren hoher Empfindlichkeit für Polarisationsänderungen durch Doppelbrechung (R. Ulrich, "Messung mechanischer, thermischer und elektrischer Grössen mit Lichtleitfasern", LABO, Oktober 1980, 1083-1093; J.-I. Sakai, T. Kimura, "Birefringence and Polarization Characteristics of Single-Mode Optical Fibers under Elastic Deformations", IEEE Journal of Quantum Electronics, Vol. QE-17, No. 6, 6. June 1981, 1014-1051). Die meisten Anwendungen von faseroptischen Drucksensoren betreffen jedoch die Schallmessung und nicht die absolute, statische Kraftmessung (T.G. Giallorenzi et al., "Optical Fiber Sensor Technology", IEEE Journal of Quantum Electronics, Vol. QE-18, No. 4, April 1982, 626-664; S.C. Rashleigh, "Acoustic sensing with a single coiled monomode fiber", Optics Letters, Vol. 5, No. 9, September 1980, 392-394). Ausserdem sind die früher beschriebenen Messverfahren nicht geeignet zur Erzielung einer hohen Messgenaüigkeit über einen grossen Messbereich (Auflösung > $10^4$). Zusätzliche Probleme entstehen, wenn der Lichtleiter an sich optisch anisotrop, d.h. unabhängig von der geometrischen Formgebung oder von der auf ihn einwirkenden Kraft doppelbrechend ist.

Von R. Ulrich a.a.O. wird ein Kraftmesser beschrieben, bei dem die zu messende Kraft in vertikaler Richtung seitlich auf einen geradlinigen, zwischen zwei Druckplatten angeordneten Monomode-Lichtleiter einwirkt. Die durch die Krafteinwirkung im Lichtleiter erzeugte Spannung führt eine optische Anisotropie herbei, wobei der Brechungsindex in horizontaler Richtung erhöht und in vertikaler Richtung erniedrigt wird. Dem Lichtleiter wird aus einem Laser polarisiertes Licht zugeführt. Durch die anisotropisch bedingte Doppelbrechung entstehen im Lichtleiter orthogonale Polarisationszustände in horizontaler und vertikaler Richtung. Die resultierende Polarisationsdrehung wird in einem Polarimeter gemessen und angezeigt. Es wird a.a.O. auch darauf hingewiesen, dass mit interferometrischen Messeinrichtungen eine höhere Empfindlichkeit und Messgenaüigkeit erreichbar ist.

Kraftmesser dieser Art sind nur brauchbar, wenn von einem an sich optisch isotropen Lichtleiter ausgegangen werden kann. Handelsübliche Monomode-Lichtleiter erfüllen diese Voraussetzung aber nicht. Sie sind infolge von Herstellungstoleranzen mehr oder weniger anisotrop, wobei die Orientierung der Anisotropie längs des Lichtleiters variieren und von Exemplar zu Exemplar verschieden sein kann. Eine einheitliche Serie von Kraftmessern ist aufgrund solcher undefinierter optischer Verhältnisse nicht realisierbar.

In der nachveröffentlichten EP-A2-120 999 wird ein faseroptischer Sensor, z. B. für Kraftmessungen, beschrieben. Dort wird die Faser tordiert, um Störeffekte der inhärenten Doppelbrechung zu eliminieren. Diese gewollte Torsion der Faser macht jedoch den beschriebenen Sensor ungeeignet für Kraftmessungen der in der EP-A2-120 999 beschriebenen Art, wenn die Methode der kraftinduzierten Doppelbrechung verwendet wird.

Der Erfindung liegt die Aufgabe zugrunde, das Kraftmessverfahren der eingangs genannten Art so zu verbessern, dass die erwähnten Nachteile vermieden werden, und eine nach diesem Verfahren arbeitende Messanordnung zu schaffen, die von den ursprünglichen Brechungseigenschaften des Lichtleiters praktisch unabhängig ist und hohe Empfindlichkeit und Messgenauigkeit aufweist.

Zur Lösung dieser Aufgabe wird ein Kraftmessverfahren mit den Merkmalen des Patentanspruchs 1 und eine Messanordnung zur Durchführung des Verfahrens mit den Merkmalen des Patentanspruchs 2 vorgeschlagen.

Zur Anwendung gelangt ein Monomode-Lichtleiter mit definierter Anisotropie, deren Orientierung mit der Kraftrichtung übereinstimmt. Die definierte Anisotropie kann durch Krümmung des Lichtleiters herbeigeführt werden. Die dadurch entstehende Anisotropie überwiegt bei weitem die eigene Anisotropie eines handelsüblichen, geradlinigen Monomode-Lichtleiters mit rundem Kernquerschnitt, so dass letztere auf den Messvorgang praktisch keinen Einfluss mehr hat. Eine entsprechende Messanordnung besteht also z. B. darin, dass der Lichtleiter zwischen den Druckplatten längs einer gekrümmten Linie, beispielsweise in einer runden offenen Schleife verläuft. Die daraus resultierende Doppelbrechung hat auf der ganzen Länge des Lichtleiters die gleiche Orientierung, welche zwangsläufig mit der Kraftrichtung übereinstimmt.

Ausserdem kann die definierte Anisotropie auch auf andere bekannte Weise bei der Herstellung des Lichtleiters erzeugt werden. Allerdings ist bei der Fixierung eines solchen Lichtleiters mit eigener Anisotropie in der Messanordnung darauf zu achten, dass die vorgegebene Orientierung der Anisotropie des Lichtleiters über die ganze Einwirkungsstrecke der Kraft beibehalten wird. Dies kann zweckmässigerweise dadurch erreicht werden, dass dem anisotropen Lichtleiter bei der Herstellung eine von der Kreisform abweichende, z. B. elliptische Querschnittsform gegeben wird, deren Orientierung mit der optischen Anisotropie übereinstimmt. Bekannte Methoden zur Herstellung von doppelbrechenden Monomode-Lichtleitern bestehen z. B. darin, dass dem Kernquerschnitt eine elliptische Form gegeben wird oder dass im Innern der Faser, insbesondere im lichtleitenden Kern, anisotrope mechanische Spannungen erzeugt werden. Auch in diesen Fällen kann der Lichtleiter in der Messanordnung längs einer gekrümmten Linie verlaufen. Dadurch kann unter Umständen eine höhere Differenz der Brechungskoeffizienten in den beiden Polarisationsrichtungen erzielt werden.

Vorzugsweise wird in den Lichtleiter linearpolarisiertes Licht eingeleitet, dessen Schwingungsebene gegenüber der Richtung der zu messenden Kraft um 45° geneigt ist, so dass die orthogonalen Polarisationszustände mit gleicher AAmplitude angeregt werden. Zu diesem Zweck kann der Lichtquelle ein entsprechend orientierter Polarisator nachgeschaltet sein.

Die durch die kraftmässige Beeinflussung der Doppelbrechung erzeugte Phasenänderung zwischen den beiden linearpolarisierten Wellen dient als Mass für die zu messende Kraft. Für den Grad der Phasenänderung und damit für die Höhe der Messempfindlichkeit ist der auf den Lichtleiter ausgeübte Druck (Kraft pro Längeneinheit) massgebend. Dieser Druck ist begrenzt durch die Bedingung, dass die unter seinem Einfluss bewirkte Formänderung des Lichtleiters im Rahmen des Hookeschen Gesetzes verläuft. Unter dieser Voraussetzung ist der integrierte Effekt längs des Lichtleiters proportional zu der zu messenden Kraft. Die Länge des zwischen zwei Druckplatten angeordneten Lichtleiters richtet sich bei gegebenem Höchstdruck einzig nach der höchsten zu messenden Kraft, d. h. nach der gewünschten Nennlast der Kraftmessanordnung.

Eine Erhöhung der Messempfindlichkeit ist durch mehrfache Einwirkung der Messkraft auf den Lichtleiter erreichbar. Zu diesem Zweck dient vorzugsweise eine Messanordnung mit einem schraubenlinienförmig ausgebildeten Lichtleiter, wobei in einem von der zu messenden Kraft beaufschlagten Stapel von Druckplatten jede Windung des Lichtleiters zwischen zwei Druckplatten angeordnet ist. Dadurch wird die unter Krafteinwirkung erzielte Phasenänderung entsprechend der Windungszahl des Lichtleiters vervielfacht.

Die Interferenzmesseinrichtung kann im einfachsten Fall zwei photoelektrische Detektoren aufweisen, denen ein unter 45° zur Richtung der zu messenden Kraft orientierter Linearpolarisator vorgeschaltet ist. Ferner können optische Verzögerungselemente vorgesehen sein, die bewirken, dass die elektrischen Detektorsignale gegenseitig um einen festen Betrag (z. B. 90°) phasenverschoben sind, was die Ermittlung der Signaldurchgänge und damit die Ansteuerung eines elektronischen Interferenzperiodenzählers erleichtert. Zur Phasenmessung dient beispielsweise eine analoge Schaltung oder ein Mikroprozessor. Damit kann die Phasendifferenz auf weniger als 90° genau über viele Interferenzperioden bestimmt werden. Eine verbesserte Anordnung mit vier Detektoren erlaubt eine wesentlich genauere Interpolation such bei Intensitäts- und Kontraständerungen.

In der Zeichnung sind Ausführungsbeispiele der erfindungsgemässen Messanordnung schematisch dargestellt, und zwar zeigen:
Fig. 1 und 2 Grund- und Aufriss einer einlagigen Messanordnung,
Fig. 3 eine Anordnung zur Phasenmessung mit vier Detektoren, und
Fig. 4 eine Ansicht einer mehrlagigen Messanordnung, teilweise im Schnitt.

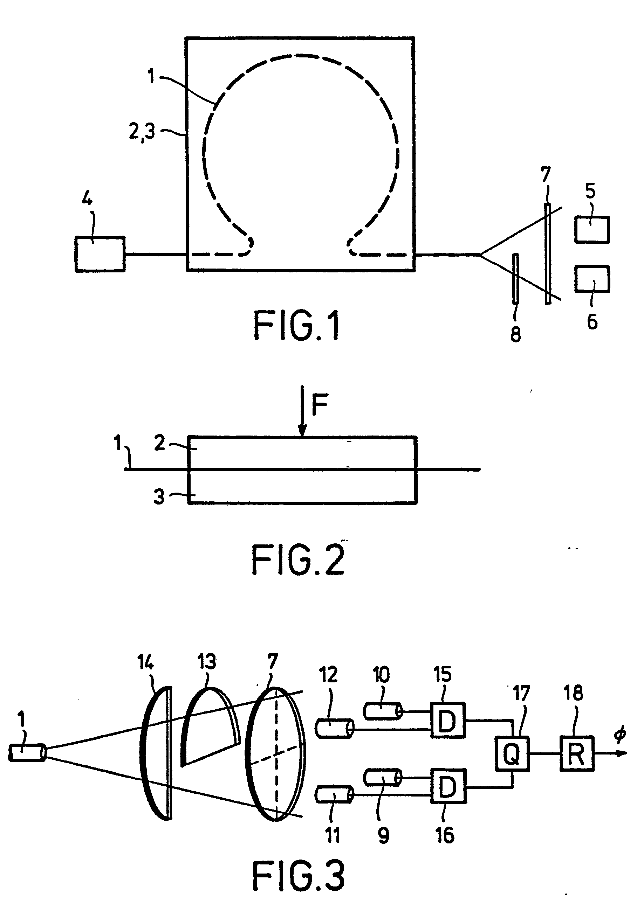

Bei der einlagigen Messanordnung nach den Fig. 1 und 2 bildet der Monomode-Lichtleiter 1 eine einzige kreisförmige Schleife, welche zwischen zwei planparallelen Druckplatten 2 und 3 angeordnet ist. Die zu messende Kraft F wirkt senkrecht auf die Druckplatte 2 und wird allein durch den Lichtleiter 1 auf die Druckplatte 3 übertragen. Sie wirkt längs des Lichtleiters 1 immer transversal auf denselben. Die Druckplatten 2, 3 können z. B. aus Stahl oder Glas bestehen; sie haben keine optische Funktion. Mit einem kontinuierlich arbeitenden Halbleiterlaser 4 wird in den Lichtleiter 1 kohärentes, linearpolarisiertes Licht eingeleitet, dessen Schwingungsebene gegenüber der Richtung der zu messenden Kraft F um 45° geneigt ist. Durch die Krümmung des Lichtleiters 1 wird eine definierte Anisotropie in demselben herbeigeführt. Dies führt zu einer Doppelbrechung des Lichts, welche längs des Lichtleiters 1 eine gleichbleibende Orientierung hat, und zwar werden durch die Doppelbrechung zwei linearpolarisierte Wellen in zueinander senkrecht stehenden Schwingungsebenen erzeugt, von denen die eine parallel zur Richtung der Messkraft F verläuft. Zwischen den orthogonalen Wellen entsteht eine Phasenverschiebung, welche vom Grad der Anisotropie bzw. der Doppelbrechung abhängt, der seinerseits durch die Grösse der Kraft F bestimmt wird. Beim Übergang vom unbelasteten in den belasteten Zustand der Messanordnung entsteht also eine Änderung der Phasenverschiebung zwischen den beiden Wellen, welche ein Nass für die zu messende Kraft F ist. Diese Phasenänderung wird interferometrisch bestimmt.

Es ist an sich bekannt, für die interferometrische Bestimmung der Phasenverschiebung zweier Lichtwellen eine optoelektronische Interferenzmesseinrichtung mit einem Interferenzperiodenzähler und einem Phasenmesser vorzusehen. Sie weist im vorliegenden Beispiel zwei photoelektrische Detektoren 5 und 6 auf, denen ein unter 45° zur Richtung der Messkraft F orientierter Linearpolarisator 7 vorgeschaltet ist. Die beiden Detektoren erfassen die aus einer Halbkreisfläche des Linearpolarisators 7 anfallenden Lichtsignalkomponenten und wandeln diese in entsprechende elektrische Signale zur Ansteuerung des Interferenzperiodenzählers und Phasenmessers um. Dem einen Detektor 6 ist ausserdem eine Viertelwellenplatte 8 mit gleicher Orientierung wie die Messkraft F vorgeschaltet, die bewirkt, dass die beiden Detektorsignale gegenseitig um 90° phasenverschoben sind. Die elektronischen Einrichtungen zur Auswertung dieser Detektorsignale für die Ermittlung des Phasenwinkels Ø sind an sich bekannt und hier nicht dargestellt.

Zur Erhaltung einer linearen Beziehung zwischen Phasenänderung und Messkraft ist ein handelsüblicher Monomode-Lichtleiter mit einem Durchmesser von z. B. 125 μ etwa mit 20 N/cm Transversaldruck belastbar. Für einen Nennwert der Messkraft F von 1000 N ist deshalb eine Lichtleiterlänge im Druckbereich von etwa 50 cm erforderlich. Es lässt sich zeigen, dass mit einer verhältnismässig einfachen Interferenzmesseinrichtung eine Messgenauigkeit von 0,1 N im Bereich von 0 bis 1000 N ohne weiteres erreichbar ist.

Die beschriebene Messanordnung hat ausserdem den Vorteil, dass sie konstruktiv einfach, selbsttragend und stabil ist.

Eine verbesserte Interferenzmesseinrichtung, welche eine genauere Interpolation des Messwertes innerhalb einer Interferenzperiode ermöglicht, ist in Fig. 3 dargestellt. Sie besitzt vier photoelektrische Detektoren 9, 10, 11 und 12, welche je einen Quadranten des Linearpolarisators 7 abtasten. Den Detektoren sind zum Teil optische Verzögerungselemente vorgeschaltet, die bewirken, dass die vier Detektorsignale gegenseitig um je 90° phasenverschoben sind. Im vorliegenden Beispiel ist dem ersten Detektor 9 kein Verzögerungselement, dem zweiten Detektor 10 eine Viertelwellenplatte 13, dem dritten Detektor 11 eine Halbwellenplatte 14 und dem vierten Detektor 12 die Viertelwellenplatte 13 und die Halbwellenplstte 14 mit jeweils gleicher Orientierung wie die zu messende Kraft F vorgeschaltet.

In elektronischen Rechengliedern 15 und 16 werden je die Differenzwerte der Signale aus den Detektoren 9, 11 und 10, 12 gebildet, während in einem elektronischen Rechenglied 17 der Quotient der beiden Differenzsignale gebildet wird. Dieser Quotient stellt den Tangens des Phasenwinkels Ø dar. Ein weiteres elektronisches Rechenglied 18 ermittelt daraus den Phasenwinkel Ø. Die Ausbildung elektronischer Rechenglieder für den genannten Zweck ist an sich bekannt und deshalb hier nicht näher beschrieben.

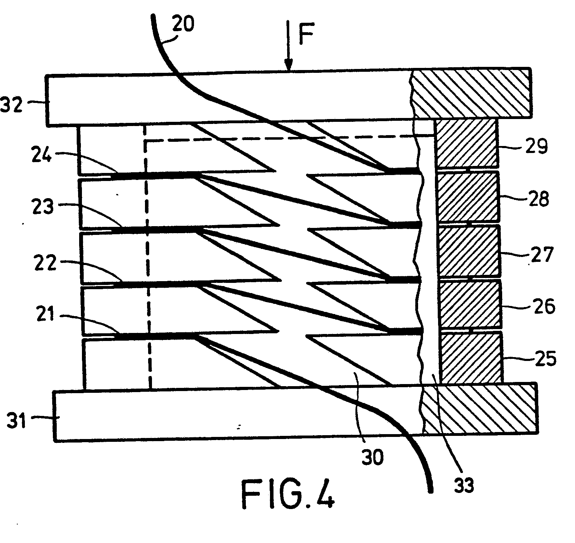

Bei der mehrlagigen Messanordnung nach Fig. 4 ist der Lichtleiter 20 schraubenlinienförmig ausgebildet und weist in diesem Beispiel vier Windungen 21 bis 24 auf, die in einem Stapel von ringförmigen Druckplatten 25 bis 29 je zwischen zwei dieser Druckplatten angeordnet sind. Schräge Schlitze 30 in den Druckplatten ermöglichen den Übergang des Lichtleiters 20 von der einen zur anderen Windungsebene. Die Druckplatten 25 bis 29 sind zwischen zwei Endplatten 31 und 32 angeordnet, wobei auf der unteren Endplatte 31 ein Zapfen 33 zur Führung der ringförmigen Druckplatten steht und auf die obere Endplatte 32 die Messkraft F einwirkt.

Jede der einzelnen Windungen 21 bis 24 des Lichtleiters 20 steht unter der Einwirkung der gesamten Messkraft F und ist dementsprechend nach den gleichen Gesichtspunkten dimensioniert wie die einfache Lichtleiterschleife bei der einlagigen Messanordnung nach den Fig. 1 und 2. Durch die mehrfache, im vorliegenden Beispiel vierfache Einwirkung der vollen Messkraft F auf den Lichtleiter 20 wird die durch die kraftmässige Beeinflussung der Doppelbrechung erzeugte Phasenänderung vervielfacht, im Beispiel vervierfacht. Auf diese Weise kann die Messempfindlichkeit bei entsprechender Windungszahl des Lichtleiters bedeutend erhöht werden.

## Patentansprüche

1. Verfahren zur Kraftmessung mit Hilfe der spannungsinduzierten Doppelbrechung in einem Monomode-Lichtleiter, dadurch gekennzeichnet, dass einem optisch anisotropen Monomode-Lichtleiter mit definierter Anisotropie kohärentes Licht zugeführt wird, das im Lichtleiter durch die anisotropisch bedingte Doppelbrechung zwei linear polarisierte Wellen in zueinander senkrecht stehenden Schwingungsebenen erzeugt, dass die zu messende Kraft parallel zu einer der Schwingungsebenen und senkrecht auf den Lichtleiter gerichtet wird und dass die durch die kraftmässige Beeinflussung der Doppelbrechung erzeugte Phasenänderung zwischen den beiden Wellen als Mass der zu messenden Kraft interferometrisch bestimmt wird.

2. Messanordnung zur Durchführung des Verfahrens nach Anspruch 1, dadurch gekennzeichnet, dass ein Monomode-Lichtleiter (1) mit definierter Anisotropie derart zwischen zwei planparallelen, unter der Einwirkung der zu messenden Kraft (F) stehenden Druckplatten (2, 3) angeordnet ist, dass die Orientierung der anisotropisch bedingten Doppelbrechung mit der Kraftrichtung übereinstimmt, dass am Eintrittsende des Lichtleiters ein Laser (4) als Lichtquelle vorgesehen ist und dass am Austrittsende des Lichtleiters eine Interferenzmesseinrichtung (5 bis 8) mit einem Interferenzperiodenzähler und einem Phasenmesser angeordnet ist.

3. Verfahren nach Anspruch 1, dadurch gekennzeichnet, dass in den Lichtleiter linearpolarisiertes Licht eingeleitet wird, dessen Schwingungsebene gegenüber der Richtung der zu messenden Kraft um 45° geneigt ist.

4. Messanordnung nach Anspruch 2, dadurch gekennzeichnet, dass dem Laser (4) ein Polarisator nachgeschaltet ist, durch den das Licht in einer gegenüber der Richtung der zu messenden Kraft (F) um 45° geneigten Schwingungsebene linearpolarisiert wird.

5. Messanordnung nach Anspruch 2, dadurch gekennzeichnet, dass der Laser (4) ein kontinuierlich arbeitender Halbleiterlaser ist.

6. Messanordnung nach Anspruch 2, dadurch gekennzeichnet, dass der Lichtleiter (1) zwischen den Druckplatten (2, 3) längs einer gekrümmten Linie verläuft, wobei die Krümmung die definierte Anisotropie mit der gewünschten Orientierung der Doppelbrechung erzwingt.

7. Messanordnung nach Anspruch 2, dadurch gekennzeichnet, dass der Lichtleiter (20) schraubenlinienförmig ausgebildet ist und dass in einem von der zu messenden Kraft (F) beaufschlagten Stapel von Druckplatten (25 bis 29) jede Windung (21 bis 24) des Lichtleiters zwischen zwei Druckplatten angeordnet ist.

8. Messanordnung nach Anspruch 2, dadurch gekennzeichnet, dass der Lichtleiter eine eigene Anisotropie mit über dessen Länge gleichbleibender Orientierung aufweist und dass der Lichtleiter eine von der Kreisform abweichende, z. B. elliptische Querschnittsform hat, deren Orientierung mit derjenigen der Anisotropie übereinstimmt, um die Ausrichtung der Anisotropie auf die Richtung der zu messenden Kraft zu ermöglichen.

9. Messanordnung nach Anspruch 2 zur Durchführung des Verfahrens nach Anspruch 3, dadurch gekennzeichnet, dass die Interferenzmesseinrichtung photoelektrische Detektoren (5, 6; 9 bis 12) aufweist, denen ein unter 45° zur Richtung der zu messenden Kraft (F) orientierter Linearpolarisator (7) vorgeschaltet ist, und dass optische Verzögerungselemente (8; 13, 14) vorgesehen sind, die bewirken, dass die elektrischen Detektorsignale gegenseitig um einen festen Betrag phasenverschoben sind.

10. Messanordnung nach Anspruch 9, dadurch gekennzeichnet, dass zwei Detektoren (5, 8) vorgesehen sind, wobei dem einen Detektor (6) eine Viertelwellenplatte (8) mit gleicher Orientierung wie die zu messende Kraft (F) vorgeschaltet ist.

11. Messanordnung nach Anspruch 9, dadurch gekennzeichnet, dass vier Detektoren (9 bis 12) vorgesehen sind, wobei dem ersten Detektor (9) kein optisches Verzögerungselement, dem zweiten Detektor (10) eine Viertelwellenplatte (13), dem dritten Detektor (11) eine Halbwellenplatte (14) und dem vierten Detektor (12) eine Viertelwellenplatte (13) und eine Halbwellenplatte (14) mit jeweils gleicher Orientierung wie die zu messende Kraft (F) vorgeschaltet sind.

**Claims**

1. A process for measuring force by means of the stress-induced birefringence in a single-mode optical fibre characterised in that coherent light is supplied to an optically anisotropic single-mode optical fibre with defined anisotropy, which light produces two linearly polarized waves in mutually perpendicular planes of oscillation in the optical fibre due to the anisotropically produced birefringence, that the force to be measured is directed parallel to one of the planes of oscillation and perpendicularly onto the optical fibre and that the change in phase between the two waves, produced by the force-induced influencing of the birefringence, is detennined by interferometric means as a measurement of the force to be measured.

2. A measuring arrangement for carrying out the process according to claim 1 characterised in that a single-mode optical fibre (1) with defined anisotropy is arranged between two plane-parallel pressure plates (2, 3) which are subjected to the effect of the force (F) to be measured, in such a way that the orientation of the anisotropically produced birefringence is the same as the direction of the force, that a laser (4) is provided as a light source at the entry end of the optical fibre, and that arranged at the exit end of the optical fibre is an interferometer apparatus (5-8) with an interference period counter and a phase measuring device.

3. A process according to claim 1 characterised in that linearly polarized light is introduced into the optical fibre, the plane of oscillation thereof being inclined through 45° relative to the direction of the force to be measured.

4. A measuring arrangement according to claim 2 characterised in that arranged downstream of the laser (4) is a polarizer for linear polarization of the light in a plane of oscillation which is inclined through 45° relative to the direction of the force (F) to be measured.

5. A measuring arrangement according to claim 2 characterised in that the laser is a continuously operating semiconductor laser.

6. A measuring arrangement according to claim 2 characterised in that the optical fibre (1) extends between the pressure plates (2, 3) along a curved line, the curvature compelling the defined anisotropy with the desired orientation in respect of birefringence.

7. A measuring arrangement according to claim 2 characterised in that the optical fibre (20) is of a helical configuration and that in a stack of pressure plates (25 to 29) which is subjected to the force (F) to be measured, each turn (21 to 24) of the optical fibre is arranged between two pressure plates.

8. A measuring arrangement according to claim 2 characterised in that the optical fibre has its own anisotropy with unifonm orientation over the length thereof, and that the optical fibre is of a cross-sectional shape which differs from the circular shape and which is for example elliptical and the orientation of which is the same as that of the anisotropy to permit alignment of the anisotropy with the direction of the force to be measured.

9. A measuring arrangement according to claim 2 for carrying out the process according to claim 3 characterised in that the interferometer apparatus comprises photoelectric detectors (5, 6; 9 to 12), with a linear polarizer (7) oriented at 45° relative to the direction of the force (F) to be measured being disposed upstream of the photoelectric detectors, and that there are provided optical delay elements (8; 13, 14) which cause the electrical detector signals to be phase-shifted relative to each other by a fixed amount.

10. A measuring arrangement according to claim 9 characterised in that there are two detectors (5, 6), wherein arranged upstream of the one detector (6) is a quarter-wave plate (8) with the same orientation as the force (F) to be measured.

11. A measuring arrangement according to claim 9 characterised in that there are four detectors (9 to 12), wherein no optical delay element is disposed upstream of the first detector (9), a quarter-wave plate (13) is arranged upstream of the second detector (10), a halfwave plate (14) is arranged upstream of the third detector (11), and a quarter-wave plate (13) and a half-wave plate (14) are arranged upstream of the fourth detector (12), each with the same orientation as the force (F) to be measured.

**Revendications**

1. Procédé de mesure de forces à l'aide de la biréfringence induite par contrainte dans un guide de lumière ou fibre optique monomode, caractérisé par le fait que le guide de lumière ou fibre optique monomode, possédant une anisotropie définie, reçoit de la lumière cohérente qui peut être décomposée en raison de la biréfringence résultant de l'anisotropie en deux ondes polarisées linéairement, selon des plans de vibration orthogonaux et par le fait que la force à mesurer est appliquée selon une direction parallèle à un des plans de vibration et perpendiculaire à la fibre optique, et que la variation de phase entre les deux ondes, engendrée par la variation de la biréfringence résultant de l'application de la force, est déterminée interférométriquement et sert de mesure de la force à déterminer.

2. Dispositif de mesure pour l'application du procédé selon la revendication 1, caractérisé par le fait qu'un guide de lumière ou fibre optique monomode (1) ayant une anisotropie définie est disposé entre deux plaques de pression (2, 3), à faces planes et parallèles, et soumises à la force (F) à mesurer, de telle façon que l'orientation de la biréfringence résultant de l'anisotropie coïncide avec la direction de la force, et caractérisé par le fait que la source lumineuse prévue à l'extrémité entrante du guide de lumière est un laser (4), et qu'à l'extrémité sortante du guide de lumière ou fibre optique se trouve un dispositif interférométrique (5 à 6) comprenant un compteur de franges d'interférence ainsi qu'un phasemètre.

3. Procédé selon la revendication 1, caractérisé par le fait que de la lumière polarisée linéairement avec un plan de vibration incliné à 45° par rapport à la direction de la force à mesurer est injecté dans le guide de lumière.

4. Dispositif de mesure selon la revendication 2, caractérisé par le fait qu'en aval du laser (4) se trouve un polariseur ayant pour effet de polariser la lumière de façon linéaire, dans un plan de vibration incliné à 45° par rapport à la direction de la force (F) à mesurer.

5. Dispositif de mesure selon la revendication 2, caractérisé par le fait que le laser (4) est un laser à semiconducteur travaillant en continu.

6. Dispositif de mesure selon la revendication 2, caractérisé par le fait que le guide de lumière ou fibre optique (1) est disposé selon une ligne courbe, entre deux plaques de pression (2, 3), la courbure engendrant obligatoirement l'anisotropie définie avec l'orientation recherchée de la biréfringence.

7. Dispositif de mesure selon la revendication 2, caractérisé par le fait que le guide de lumière (20) décrit une hélice, et qu'à l'intérieur d'un empilage de plaques de pression (25 à 29), sur lequel est appliquée la force (F) à mesurer, chaque boucle (21 à 24) de la fibre optique est comprise entre deux plaques de pression.

6. Dispositif de mesure selon la revendication 2, caractérisé par le fait que le guide de lumière possède une anisotropie propre dont l'orientation reste inchangée sur toute sa longueur, et qu'il possède une section non circulaire, par exemple une section elliptique, dont l'orientation coïncide avec celle de l'anisotropie correspondante, afin de permettre l'orientation de l'anisotropie dans la direction de la force à mesurer.

9. Dispositif de mesure selon la revendication 2, pour l'application du procédé selon la revendication 3, caractérisé par le fait que le dispositif interférométrique comporte des détecteurs photo-électriques (5, 6; 9 à 12) en amont desquels se trouve un polariseur linéaire (7) orienté à 45° par rapport à la force (F) à mesurer, et que des éléments (8; 13, 14) de déphasage optique sont prévus, qui ont pour effet de déphaser les signaux électriques des détecteurs, d'une valeur fixe, les une par rapport aux autres.

10. Dispositif de mesure selon la revendication 9, caractérisé par le fait que deux détecteurs (5, 6) sont prévus, l'un des détecteurs (6) étant précédé d'une lame quart d'onde (8) dont l'orientation est la même que celle de la force (F) à mesurer.

11. Dispositif de mesure selon la revendication 9, caractérisé par le fait que quatre détecteurs (9 à 12) sont prévus, le premier détecteur (9) n'étant précédé d'aucun élément de déphasage optique, le deuxième détecteur (10) étant précédé d'une lame quart d'onde (13), le troisième détecteur (11) étant précédé d'une lame demi-onde (14), et le quatrième détecteur (12) étant précédé d'une lame quart d'onde (13) et d'une lame demi-onde (14) dont les orientations sont les mêmes, respectivement, que celle de la force (F) à mesurer.

FIG.1

FIG.2

FIG.3

FIG.4